# EUROPÄISCHE PATENTSCHRIFT

(11) **EP 0 853 563 B1**
(45) Veröffentlichungstag und Bekanntmachung des Hinweises auf die Patenterteilung: **13.10.1999**
(21) Anmeldenummer: 96924866.5
(22) Anmeldetag: 03.07.1996
(51) Int. Cl.: B60S 1/38

(54) **WISCHBLATT MIT AUSWECHSELBAREM WISCHGUMMI FÜR EINEN FAHRZEUGSCHEIBENWISCHER**
WIPER BLADE WITH REPLACEABLE WIPER BLADE RUBBER FOR A VEHICLE WINDSCREEN WIPER
BALAI D'ESSUIE-GLACE A LAME CAOUTCHOUC REMPLA ABLE POUR ESSUIE-GLACE D'AUTOMOBILE

(30) Priorität: 02.10.1995 DE 19536744
(43) Veröffentlichungstag der Anmeldung: 22.07.1998
(73) Patentinhaber: ITT Automotive Europe GmbH, 60488 Frankfurt (DE)
(72) Erfinder: EGNER-WALTER, Bruno, D-74076 Heilbronn (DE); SCHMID, Eckhardt, D-74336 Brackenheim (DE); SCHOLL, Wolfgang, D-74376 Gemmrigheim (DE); JAISLE, Klaus, D-74211 Leingarten (DE)
(74) Vertreter: Dreiss, Fuhlendorf, Steimle & Becker
(86) Internationale Anmeldenummer: EP9602913
(87) Internationale Veröffentlichungsnummer: WO9712789

(56) Entgegenhaltungen:
- EP-A- 0 490 833
- DE-U- 9 314 333
- FR-A- 2 681 025

## Beschreibung

Die Erfindung bezieht sich auf ein Wischblatt mit auswechselbarem Wischgummi für einen Fahrzeugscheibenwischer mit den Merkmalen des Oberbegriffs des Anspruchs 1 und geht aus von einem Scheibenwischer der aus DE-U-91 16 994.1 oder EP-A-0 490 833 bekannten Art.

In der DE 91 16 994.1 U1 ist ein Wischblatt beschrieben, bei dem ein durch Strangpressen hergestellter Wischgummi mit einer in den Kopfteil des Wischgummis eingelegten Verstärkungsschiene in Längsrichtung frei verschiebbar von den Halteklauen eines Traggestells gehalten ist. Das Traggestell besteht aus einem übergeordneten und einem untergeordneten Tragbügel, welche um eine querverlaufende Achse schwenkbar miteinander verbunden sind. Die Tragbügel des Traggestells bestehen aus Kunststoff, und der übergeordnete Tragbügel ist um eine ebenfalls querverlaufende Achse schwenkbar an einem Wischarm aus Kunststoff angelenkt. Um die Längsverschiebbarkeit des Wischgummis in den Halteklauen des Traggestells auf das erforderliche Maß zu begrenzen, ist am inneren Ende des Wischblattes ein Anschlag an den Tragbügel angeformt, der sich vom Rücken des Tragbügels nach unten erstreckt und dem Ende des Wischgummis gegenübersteht. Am äußeren Ende des Traggestells ist ein zweiter Anschlag vorgesehen, der dem anderen Ende des Wischgummis gegenübersteht. Dieser zweite Anschlag befindet sich an einem speziellen Endstück aus Kunststoff, welches an dem äußeren Ende des betreffenden Tragbügels um eine quer zu dem Wischgummi verlaufende geometrische Achse zwischen einer Haltestellung und einer Freigabestellung für den Wischgummi verschwenkbar angeordnet ist. An zwei parallelen Lappen, welche eine Verlängerung der Außenseiten des Endstückes darstellen, befindet sich jeweils ein einwärtsgerichteter Gelenkzapfen, der in einem ihm zugeordneten Lagersitz an dem Ende des Tragbügels schwenkbar angeordnet ist. Außerdem wird mittels einer speziellen Federzunge an dem Endstück, welche mit einem entsprechenden Gegenrastmittel am Tragbügel zusammenwirkt, eine selbsttätige Arretierung des Endstückes in der gestreckten Haltestellung erzielt. In dem Endstück mit dem zweiten Anschlag wird gewissermaßen die Form des Tragbügels fortgesetzt, so daß der zweite Anschlag vom Rücken des Endstückes nach unten gerichtet ist.

Zum Auswechseln des Wischgummis wird unter Überwindung der Rastkraft das Endstück in eine nach oben abgewinkelte Freigabestellung verschwenkt. Nunmehr kann der verschlissene Wischgummi in Längsrichtung aus den Halteklauen des Traggestells herausgezogen und in umgekehrter Richtung ein neuer Wischgummi in die Halteklauen eingeschoben werden. Dann wird das Endstück wieder zurück in seine gestreckte Haltestellung für den Wischgummi geschwenkt. Dabei greift die am Endstück befindliche Rastfeder selbsttätig in eine am Tragbügel ausgebildete und als Gegenrastmittel dienende Form ein. Damit ist das Endstück in seiner gestreckten Haltestellung selbsttätig arretiert.

Die für das Auswechseln des Wischgummis erforderliche Verschwenkbewegung des Endstückes mit dem zweiten Anschlag verläuft in einer Ebene, die in Längsrichtung des Wischblattes bzw. des Wischgummis verläuft. Der Wischgummi ist ebenfalls in seiner Längsrichtung verschiebbar in den Halteklauen des Traggestells gelagert. Beim Betrieb des Scheibenwischers führt der Wischarm eine pendelnde Schwenkbewegung um die Wischerwelle aus. Dabei kann es passieren, daß der Wischgummi während dieser pendelnden Schwenkbewegung in die der Wischerwelle gegenüberliegende Richtung des Wischblattes verschoben wird und gegen den an dem Endstück befindlichen zweiten Anschlag gedrückt wird. Somit besteht die Gefahr, daß dabei das Endstück durch die Kraft des gegen den zweiten Anschlag drückenden Wischgummis aus seiner Haltestellung heraus verschwenkt wird und diese Längsrichtung für den Wischgummi freigibt. Diese Gefahr besteht vor allem dann, wenn durch mehrmaligen Wischgummiwechsel oder durch Materialalterung die Federkraft der an dem Endstück befindlichen Rastfeder verringert ist. Der Wischgummi könnte ungewollt, zumindest teilweise, aus den Halteklauen des Traggestells herausrutschen, wodurch eine Unsicherheit entstehen würde.

Aufgabe der Erfindung ist es, ein Wischblatt der eingangs beschriebenen Art entsprechend zu verbessern.

Erfindungsgemäß wird die Aufgabe durch ein Wischblatt mit den Merkmalen des Anspruchs 1 gelöst. Dadurch, daß nunmehr der an einem speziellen Endstück befindliche zweite Anschlag um eine, zumindest annähernd parallel zur Längsrichtung des Wischgummis verlaufende geometrische Achse in seine Haltestellung oder Freigabestellung drehbar ist, ist gewährleistet, daß eine in Längsrichtung des Wischgummis auf den zweiten Anschlag einwirkende Kraft des Wischgummis nicht in der Lage ist, das Endstück bzw. den zweiten Anschlag aus seiner Haltestellung in die Freigabestellung für den Wischgummi zu bewegen. Dadurch ist mit Sicherheit ausgeschlossen, daß der Wischgummi beim Betrieb des Scheibenwischers ungewollt aus den Halteklauen des Tragbügels bzw. Traggestells herausrutschen und die Sicherheit gefährden kann.

Da im allgemeinen ein langgestrecktes Wischblatt der eingangs beschriebenen Art höher ist als breit, wird eine Ausgestaltung der Erfindung gemäß Anspruch 6 als vorteilhaft betrachtet, wonach die geometrische Achse, um welche das Endstück mit dem zweiten Anschlag relativ zum Tragbügel bzw. Traggestell des Wischblatts verdrehbar angeordnet ist, mittig oberhalb des Wischgummis verläuft und der zweite Anschlag sich rechtwinklig zu dieser geometrischen Achse erstreckt. Diese Anordnung der geometrischen Achse gewährleistet eine optimale Ausnutzung der an einem derartigen Wischblatt vorhandenen Platzverhältnisse. Im Zusammenhang mit dieser Anordnung der geometrischen Achse ist es weiterhin vorteilhaft, daß gemäß Anspruch 7 das Endstück durch Drehung um 180° von seiner Haltestellung in seine Freigabestellung bzw. umgekehrt bringbar ist. Wenn hierbei außerdem gemäß Anspruch 8 das Endstück so gestaltet wird, daß die Höhe des zweiten Anschlags zwischen der geometrischen Achse und seiner Unterseite bzw. der Unterseite des Endstückes größer ist als der Abstand zwischen der geometrischen Achse und der Oberseite des Wischgummis und daß außerdem die gegenüberliegende Höhe des zweiten Anschlages zwischen der geometrischen Achse und seiner Oberseite bzw. der Oberseite des Endstückes kleiner ist als der Abstand zwischen der geometrischen Achse und der Oberseite des Wischgummis, wird erreicht, daß die Gestalt und Größe des zweiten Endes des Tragbügels bzw. Traggestells mit dem verdrehbaren Endstück im wesentlichen der Form und Größe des gegenüberliegenden ersten Endes des Tragbügels bzw. Traggestells mit dem festen ersten Anschlag entsprechen kann. Mit anderen Worten heißt das, daß die Platz- bzw. Größenverhältnisse des Wischblattes optimal ausgenutzt werden und daß es nicht erforderlich ist, das zweite Ende des Tragbügels bzw. des Traggestells mit dem bewegbaren Endstück größer auszuführen.

Eine einheitliche und ansehnliche Form des Wischblattes ist dadurch erreichbar, daß gemäß Anspruch 2 die Form des Endstückes mit dem zweiten Anschlag, zumindest weitgehend, der Form des ersten Endes des Traggestelles mit dem ersten Anschlag entspricht und dabei an die Form des zweiten Endes des Traggestells angepaßt ist. Dabei ist die Gestaltung des Wischblattes dann optimal, wenn gemäß Anspruch 3 in Haltestellung des zweiten Anschlages bzw. des Endstückes die Außenfläche des zweiten Endes des Traggestells unmittelbar und spaltfrei in die Außenfläche des Endstückes übergeht. Das wird dadurch erreicht, daß die einander gegenüberliegenden Kanten, die einmal durch die äußere Oberfläche und die Stirnfläche des zweiten Endes des Traggestells und zum anderen durch die äußere Oberfläche und die am zweiten Ende des Traggestells anliegende Stirnfläche des Endstückes gebildet sind, scharfkantig ausgebildet sind und unmittelbar aneinander anliegen. Das hat außerdem noch den Vorteil, daß die Borsten einer Fahrzeugwaschanlage nicht in einen Spalt bzw. eine Kerbe zwischen dem zweiten Ende des Traggestells und dem Endstück eindringen und hängenbleiben können.

Um zu verhindern, daß die Borsten einer Fahrzeugwaschanlage an dem Endstück angreifen und dieses ungewollt und unbemerkt in die Freigabestellung bewegen können, wird eine Ausgestaltung gemäß Anspruch 4 empfohlen, wonach die Unterseite des Endstückes konvex geformt ist. Auftreffende Borsten gleiten somit seitlich ab und finden keine Angriffsmöglichkeit. Im wesentlichen aus stilistischen Gründen sollte in einem solchen Fall auch die Unterseite des gegenüberliegenden ersten Endes des Traggestells konvex geformt sein.

Für eine stabile und ausreichend sichere verdrehbare Befestigung des Endstückes an dem zweiten Ende des Traggestells ist gemäß einer vorteilhaften Ausgestaltung nach Anspruch 9 an dem zweiten Ende des Traggestells eine quer zur Längsrichtung des Wischgummis angeordnete Rippe bzw. Zwischenwand vorgesehen, mit welcher das Endstück um die geometrische Achse drehbar verbunden ist. Hierzu wird eine Ausgestaltung gemäß Anspruch 10 empfohlen, wonach das Endstück über einen Gelenkzapfen mit dieser Rippe oder Zwischenwand verbunden ist, welcher in einer Durchgangsbohrung drehbar gelagert ist. Dabei kann entweder der Gelenkzapfen an dem Endstück befestigt sein und die Durchgangsbohrung sich in der Rippe bzw. Zwischenwand am zweiten Ende des Traggestells befinden oder umgekehrt. Damit eine derartige Verbindung des Endstükkes mit dem zweiten Ende des Traggestells montagefreundlich erfolgen kann, sollte diese als verliersichere Rastverbindung ausgestaltet sein. Eine derartige Verbindung kann relativ einfach in der Art erreicht werden, daß gemäß Anspruch 12 der Gelenkzapfen die Durchgangsbohrung durchgreift und dabei das aus der Durchgangsbohrung herausragende freie Ende des Gelenkzapfens verdickt ausgeführt ist.

Um in einem solchen Fall den Gelenkzapfen in die Durchgangsbohrung in der Rippe oder Zwischenwand einbringen zu können, sind zwei prinzipielle Gestaltungsvarianten als vorteilhaft zu empfehlen. Die eine Variante gemäß Anspruch 13 sieht vor, daß die Durchgangsbohrung in der Rippe derartig radial geöffnet ist, daß der Gelenzapfen in radialer Richtung rastend in die Durchgangsbohrung einzubringen ist. Die radiale Öffnung der Durchgangsbohrung ist dabei so gestaltet, daß sie mit gegenüberliegenden Rastvorsprüngen ausgestattet ist, welche beim Eindringen des Gelenkzapfens vorübergehend elastisch ausweichen und anschließend ihre Normalstellung wieder einnehmen können. Die andere Variante gemäß Anspruch 14 sieht vor, daß die Durchgangsbohrung mit der Rippe an ihrem Umfang geschlossen ausgebildet ist. Um in diesem Fall den Gelenkzapfen, dessen freies Ende verdickt ausgebildet ist und dadurch als Rastmittel wirkt, in axialer Richtung in die Durchgangsbohrung einbringen zu können, sind vom freien Ende her in axialer Richtung entsprechende Ausweichschlitze in den Gelenkzapfen eingebracht. Diese Ausweichschlitze sind so gestaltet, daß das freie Ende des Gelenkzapfens vorübergehend auf einen Querschnitt zusammengedrückt werden kann, der kleiner oder gleich dem Querschnitt der Durchgangsbohrung ist. Bei der Montage des Endstückes wird also der Gelenkzapfen in axialer Richtung in die Durchgangsbohrung eingebracht. Am Ende dieses Vorganges ragt das verdickte Ende des Gelenkzapfens an der Rückseite der Rippe aus der Durchgangsbohrung heraus und geht aufgrund elastischer Rückstellkräfte in eine Raststellung über, in welcher das verdickte Ende des Gelenkzapfens die Rückseite der Rippe hintergreift.

Weitere vorteilhafte Ausgestaltungen und Einzelheiten der Erfindung sind in den nachfolgenden Ausführungsbeispielen näher beschrieben. In den zugehörigen Zeichnungen zeigen:
- Fig. 1: eine Seitenansicht eines erfindungsgemäßen Wischblattes,
- Fig. 2: eine Draufsicht auf das Wischblatt gemäß Fig. 1,
- Fig. 3: im Längsschnitt den äußeren Krallenbügel, der das erste Ende des Traggestells bildet,
- Fig. 4: im Längsschnitt den Krallenbügel, der das zweite Ende des Traggestells bildet,
- Fig. 5: in Draufsicht ein Ausführungsbeispiel des zweiten Endes des Traggestells in vergrößerter Darstellung,
- Fig. 6: den Schnitt VI-VI aus Fig. 5 mit Endstück in Haltestellung (HS),
- Fig. 6a: ein Detail aus Fig. 6,
- Fig. 7: eine Schnittdarstellung gemäß Fig. 6, jedoch ohne Wischgummi und mit Endstück in Freigabestellung (FS),
- Fig. 8: im Längsschnitt ein anderes Ausführungsbeispiel des zweiten Endes des Traggestells,
- Fig. 8a: ein Ausführungsbeispiel des Gelenkzapfens des Endstücks in Blickrichtung Y gemäß Fig. 8 und
- Fig. 8b: ein anderes Ausführungsbeispiel des Gelenkzapfens des Endstücks in Blickrichtung Y gemäß Fig. 8.

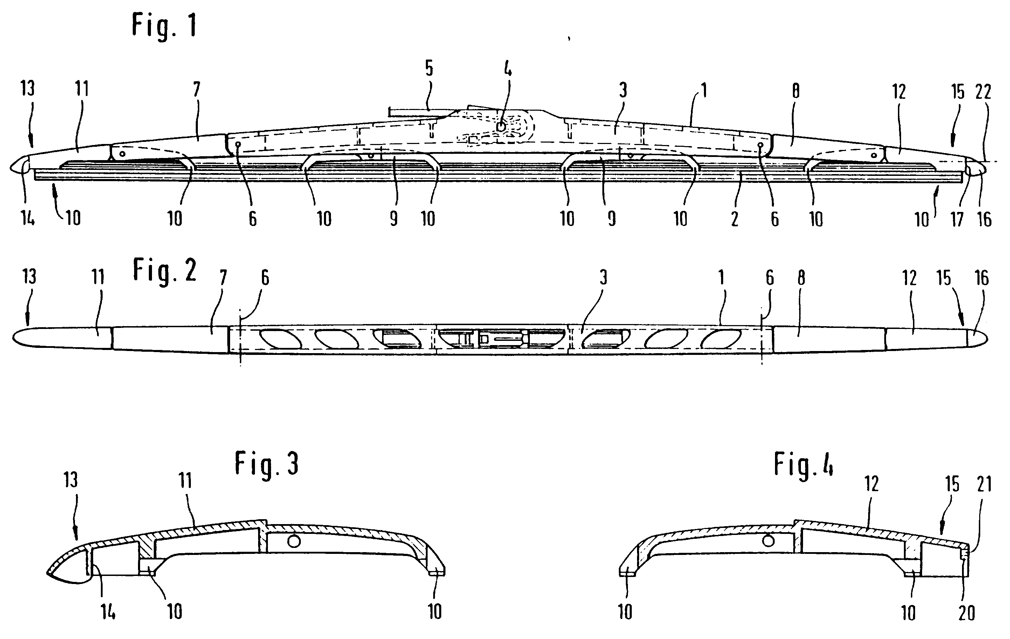

Das in den Fig. 1 und 2 dargestellte Wischblatt besteht im wesentlichen aus einem langgestreckten Traggestell 1, an dessen Unterseite ein an sich bekannter Wischgummi 2 gehalten und geführt ist. Das Traggestell 1 besitzt einen Tragbügel 3, der etwa in seinem mittleren Bereich über einen querverlaufenden Gelenkbolzen 4 schwenkbar mit dem Wischarm 5 eines Fahrzeugscheibenwischers zu verbinden ist. An den gegenüberliegenden Enden des Tragbügels 3 sind um jeweils eine quer verlaufende Achse 6 schwenkbar ein erster Zwischenbügel 7 und ein zweiter Zwischenbügel 8 angelenkt. An dem jeweils inneren Ende des ersten und des zweiten Zwischenbügels 8 ist jeweils ein innerer Krallenbügel 9 mit den Halteklauen 10 angelenkt. Weiterhin ist ein äußerer Krallenbügel 11, der ebenfalls Halteklauen 10 besitzt, an dem äußeren Ende des ersten Zwischenbügels 7 angelenkt, und ein anderer äußerer Krallenbügel 12, der ebenfalls Halteklauen 10 besitzt, ist an das äußere Ende des zweiten Zwischenbügels 8 angelenkt. Der Tragbügel 3 sowie die Zwischenbügel 7, 8 und die Krallenbügel 9, 11, 12 sind im Querschnitt U-artig geformt, und im Bereich ihrer Anlenkstellen ist jeweils der untergeordnete Bügel innerhalb des Querschnittsprofils des übergeordneten Bügels angeordnet und über einen Gelenkstift mit diesem verbunden. Dabei ist der Gelenkstift jeweils in fluchtenden Bohrungen in den Bügeln angeordnet und in axialer Richtung gegen Verschieben gesichert. Es wird empfohlen, den Gelenkstift jeweils drehfest an dem untergeordneten Bügel zu arretieren und drehbar im übergeordneten Bügel zu lagern.

Der äußere Krallenbügel 11, an dem sich das erste Ende 13 des Traggestells 1 befindet, ist mit einem ersten Anschlag 14 versehen, welcher starr an dem Krallenbügel 11 angebracht ist und dem Ende des Wischgummis 2 gegenübersteht. An dem anderen äußeren Krallenbügel 12, an welchem sich das zweite Ende 15 des Traggestells 1 befindet, ist ein spezielles Endstück 16 beweglich befestigt, an welchem sich der zweite Anschlag 17 für den Wischgummi 2 befindet.

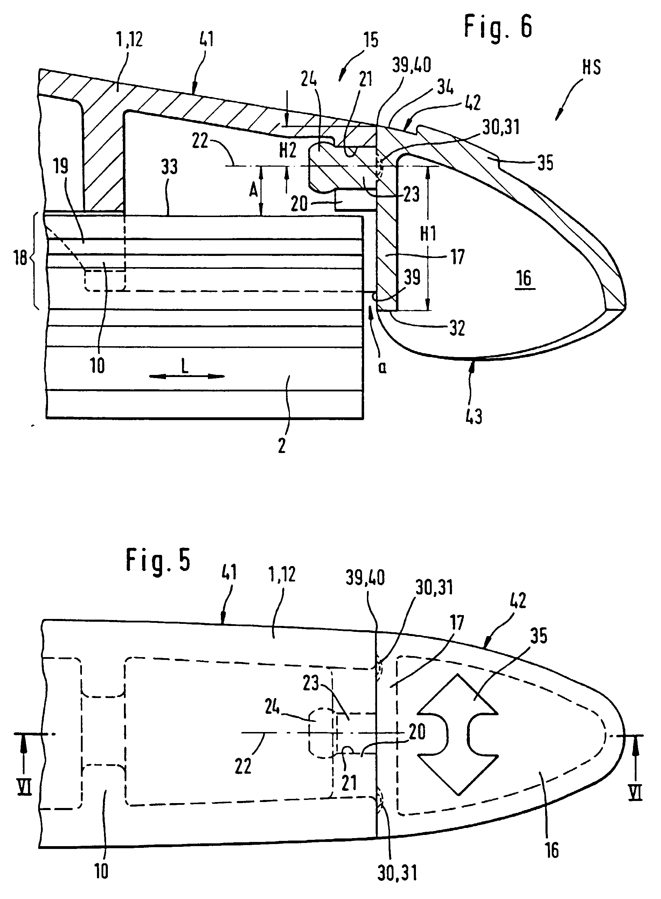

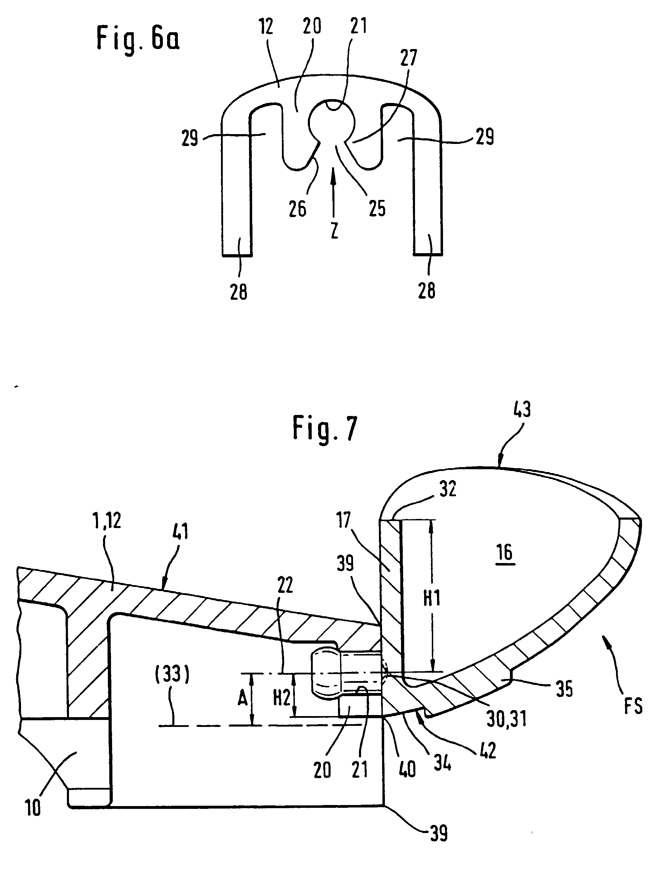

Der Wischgummi 2 weist einen Kopfteil 18 auf, an dessen Unterseite über einen sogen. Kippsteg die eigentliche Wischlippe befestigt ist. Der Wischgummi 2, in dessen Kopfteil 18 seitlich Federschienen 19 eingelegt sind, wird mit seinem Kopfteil 18 so von den Halteklauen 10 des Traggestells 1 gehalten und geführt, daß er relativ zu den Halteklauen 10 in seiner Längsrichtung L in dem durch den ersten Anschlag 13 und den zweiten Anschlag 17 begrenzten Bereich freiverschiebbar ist (siehe auch Fig. 6).

Es wird noch darauf hingewiesen, daß das gesamte Traggestell 1 des Wischblattes und das Endstück 16 aus einem geeigneten Kunststoff hergestellt sind. Dadurch ergibt sich eine vorteilhafte Gewichtseinsparung gegenüber einer Ausführung in Metall und außerdem besteht eine größere Gestaltungsmöglichkeit hinsichtlich der Form der einzelnen Bestandteile.

In Fig. 3 ist der äußere Krallenbügel 11 im Längsschnitt gezeigt. Außer den Halteklauen 10 ist insbesondere der erste Anschlag 14 erkennbar, der an dem ersten Ende 13 des Traggestells starr an dem Krallenbügel 11 befestigt ist. Der erste Anschlag 14 ist gewissermaßen eine Zwischenwand, die sich quer zu dem Krallenbügel 11 zwischen dessen Außenwänden erstreckt, welche im Querschnitt tunnelartig ausgebildet sind. Die Höhe des ersten Anschlages 14 ist so bemessen, daß die Stirnseite des Kopfteiles 18 des Wischgummis 2 anschlagen kann, wodurch die Verschiebbarkeit des Wischgummis 2 in seiner Längsrichtung L begrenzt ist. Die Unterseite des ersten Endes 13 des Traggestells 1 ist konvex geformt.

Fig. 4 zeigt den anderen äußeren Krallenbügel 12, an dem sich das zweite Ende 15 des Traggestells 1 befindet. In einem Abstand hinter der äußeren Halteklaue 10, welcher zumindest annähernd dem Abstand des ersten Anschlages 14 von der äußeren Halteklaue 10 an dem äußeren Krallenbügel 11 (Fig. 3) entspricht, befindet sich an dem äußeren Krallenbügel 12 eine quer zur Längsrichtung L des Wischgummis 2 verlaufende Rippe 20, welche zwischen den Außenwänden des im Querschnitt tunnelartig gestalteten Krallenbügels 12 angeordnet ist. Diese Rippe 20 bildet gewissermaßen am Ende 15 des Traggestells 1 eine Stirnseite. Es ist noch erkennbar, daß diese Rippe 20 eine Durchgangsbohrung 21 besitzt, die koaxial zu der geometrischen Achse 22, also zumindest annähernd parallel zu der Längsrichtung L des Wischgummis 2 verläuft.

Verschiedene Ausführungsbeispiele für die Gestaltung des zweiten Endes 15 des Traggestells 1 mit dem daran angebrachten Endstück 16 werden nachfolgend anhand der Fig. 5 bis 8b näher beschrieben.

In den Fig. 5 und 6 ist das zweite Ende 15 des Traggestells 1, welches sich an dem äußeren Krallenbügel 12 befindet, mit dem daran um die geometrische Achse 22 verdrehbar angeordnete Endstück 16 dargestellt, wobei sich hier das Endstück 16 in seiner Haltestellung HS für den Wischgummi 2 befindet. Das Endstück 16 ist an die Form des zweiten Endes 15 des Traggestells 1 angepaßt und dabei so geformt, daß die Außenfläche 41 des äußeren Krallenbügels 12 unmittelbar und spaltfrei in die Außenfläche 42 des Endstückes 16 übergeht. Das wird im wesentlichen dadurch erreicht, daß die zwischen der Außenfläche 41 und der Stirnfläche des zweiten Endes 15 des Traggestells 1 gebildete Kante 39 scharfkantig geformt ist. Ebenso ist die dieser Kante 39 unmittelbar gegenüberstehende Kante 40, welche zwischen der Außenfläche 42 des Endstückes 16 und der Außenfläche des zweiten Anschlages 17 gebildet ist, scharfkantig geformt. Beide Kanten entsprechen sich in ihrem Verlauf und liegen unmittelbar aneinander an.

In den Figuren 6 und 7 ist außerdem erkennbar, daß die Unterseite 43 des Endstückes 16 konvex geformt ist. Die Wand des Endstückes 16 ist also bogenförmig nach unten gewölbt, damit die Borsten einer Fahrzeugwaschanlage seitlich abgleiten können und nicht ungewollt das Endstück 16 von der Haltestellung HS in die Freigabestellung FS bewegen.

Der Anschlag 17 ist im wesentlichen eine quer zur Längsrichtung L des Wischgummis verlaufende Außenwand des Endstückes 16, welches im Prinzip ein hohler, nach unten offener Körper ist. Der zweite Anschlag 17 ist also einstückig mit dem aus Kunststoff hergestellten Endstück 16 verbunden. Von dem Anschlag 17 steht rechtwinklig ein Gelenkzapfen 23 ab, dessen freies Ende eine Verdickung 24 in Form einer Kugelscheibe ausgebildet ist. Dieser Gelenkzapfen 23 ist ebenfalls Bestandteil des Endstückes 16. Der Gelenkzapfen 23 ist in der Durchgangsbohrung 21 der Rippe 20 um die geometrische Achse 22 verdrehbar gelagert. Die Verdickung 24 ragt aus der Durchgangsbohrung 21 an der Innenseite der Rippe 20 heraus und verhindert, daß der Gelenkzapfen 23 in Richtung der geometrischen Achse 22 aus der Durchgangsbohrung 21 herausgleiten kann. Um in einem einfachen Montageprozeß das Endstück 16 mit dem zweiten Ende 15 des Traggestells bzw. des äußeren Krallenbügels 12 verbinden zu können, ist die Durchgangsbohrung 21 radial nach unten geöffnet. Aus Fig. 6a ist ersichtlich, daß diese radiale Öffnung 25 mit gegenüberliegenden Einführungsschrägen 26 und Rastvorsprüngen 27 ausgestattet ist. Zum Befestigen des Endstückes 16 an dem zweiten Ende 15 wird der Gelenkzapfen 23 in Richtung des Pfeiles Z in die Durchgangsbohrung 21 hineingedrückt. Dabei weichen die Rastvorsprünge 27 elastisch aus und gehen nach dem Durchtritt des Gelenkzapfens 23 wieder in ihre Ausgangsstellung zurück. Das Endstück 16 ist somit verliersicher an dem Traggestell gehalten. Damit bei der Montage des Endstückes 16 die Rastvorsprünge 27 ausreichend elastisch bewegbar sind, ist zwischen die Rippe 20 und die Seitenwände 28 des Krallenbügels 12 jeweils ein Freischnitt 29 eingebracht.

Das Endstück 16 muß zumindest in seiner Haltestellung HS arretiert sein. Um ein selbsttätiges Herstellen bzw. Lösen einer solchen Arretierung zu ermöglichen, ist eine Rastung vorgesehen, welche sowohl in der Haltestellung HS als auch in der dazu um 180° verdrehten Freigabestellung FS (Fig. 7) wirksam ist. Zur Herstellung der Rastung sind an der Stirnseite der Rippe links und rechts der Durchgangsbohrung 21 und dabei in bezug auf die geometrische Achse 22 diametral gegenüberliegend jeweils ein kugelkappenartiger Rastvorsprung 30 angeformt (siehe auch Fig. 5). Diesen kugelkappenartigen Rastvorsprüngen 30 sind zwei entsprechende Vertiefungen 31 zugeordnet, welche in die Außenseite des Anschlages 17 eingebracht sind, der unmittelbar an der Rippe 20 anliegt. Die Rastvorsprünge 30 und die zugehörigen Vertiefungen 31 sind so bemessen, daß die Rastverbindung durch die elastischen Eigenschaften der verwendeten Materialien beim Verdrehen des Endstückes 16 aufhebbar ist, daß aber trotzdem eine ausreichend feste Rastung herstellbar ist, welche ein selbsttätiges Lösen der Rastverbindung beim Betrieb des Scheibenwischers verhindert.

In der Haltestellung HS steht der Anschlag 17 am zweiten Ende 15 des Traggestells 1 der Stirnseite des Wischgummis 2, insbesondere dem Kopfteil 18 des Wischgummis 2, gegenüber und begrenzt damit dessen Verschiebbarkeit in seiner Längsrichtung L. In Fig. 6 ist ein kleiner Abstand a zwischen dem zweiten Anschlag 17 und der Stirnseite des Kopfteiles 18 des Wischgummis 2 ersichtlich. Dem Fachmann ist klar, wie groß die Strecke in Längsrichtung L des Wischgummis sein muß, um welche der Wischgummi 2 verschiebbar ist, bevor er an dem ersten Anschlag 14 bzw. dem zweiten Anschlag 17 anstößt. Andererseits sollte diese Strecke auch nicht größer bemessen sein als erforderlich.

In Fig. 6 ist erkennbar, daß der zweite Anschlag 17 rechtwinklig zu der geometrischen Achse 22 angeordnet ist. Seine Höhe H1 zwischen der geometrischen Achse 22 und der Unterseite 32 des zweiten Anschlages 17 ist größer als der Abstand A zwischen der geometrischen Achse 22 und der Oberseite 33 des Wischgummis 2. Dadurch wird gewährleistet, daß der zweite Anschlag 17 mit Sicherheit die Verschiebbarkeit des Wischgummis 2 in seiner Längsrichtung L begrenzt und damit ein Herausgleiten des Wischgummis aus den Halteklauen 10 des Traggestells 1 verhindert. Die Höhe H2 zwischen der geometrischen Achse 22 und der Oberseite 34 des zweiten Anschlages 17 bzw. des Endstückes 16 ist kleiner als die Höhe H1 und ebenfalls kleiner oder höchstens gleich dem Abstand A zwischen der geometrische Achse 22 und der Oberseite 33 des Wischgummis 2.

Durch eine optimale Abstimmung der Lage der geometrischen Achse 22 und der Höhen H1 und H2 des Endstückes 16 wird neben der Gewährleistung einer sicheren Funktion auch noch gewährleistet, daß das Endstück 16 sich harmonisch an das zweite Ende 15 des Traggestells 1 bzw. des Krallenbügels 12 anschließt.

Die Bedeutung der Höhe H2 des zweiten Anschlages 17 bzw. Endstückes 16 ist aus Fig. 7 ersichtlich. Die Höhe H2 sichert ab, daß bei in Freigabestellung FS befindlichem Endstück 16 der Wischgummi 2 in seiner Längsrichtung L unkompliziert von dem Traggestell abgezogen werden kann. Natürlich wird dadurch auch ermöglicht, daß ebenso unkompliziert ein neuer Wischgummi 2 in umgekehrter Richtung in die Halteklauen 10 des Traggestells 1 eingeschoben werden kann. Hierbei ist selbstverständlich, daß auch die Rippe 20 zumindest kurz oberhalb der Oberseite 33 des Wischgummis 2 enden muß. In Fig. 7 nimmt das Endstück 16 seine Freigabestellung FS ein, die um 180° zu seiner Haltestellung HS um die geometrische Achse 22 verdreht ist.

Damit ein Austausch des Wischgummis 2 auch von einem Laien einfach ausführbar ist und keiner besonderen Anleitung bedarf, ist an der Oberseite 34 des Endstückes 16 eine Markierung 35 vorgesehen, welche zu erkennen gibt, an welchem Ende des Wischblattes sich der zwischen seiner Haltestellung HS und Freigabestellung FS bewegbare zweite Anschlag 17 befindet. Im vorliegenden Fall ist diese Markierung 35 in Form eines Doppelpfeiles ausgebildet, welcher die Verdrehrichtung des Endstückes angibt. Damit diese Markierung 35 auch unter der Einwirkung von Umwelteinflüssen oder Verschmutzung dauerhaft erhalten bleibt und deutlich erkennbar ist, ist sie erhaben ausgebildet.

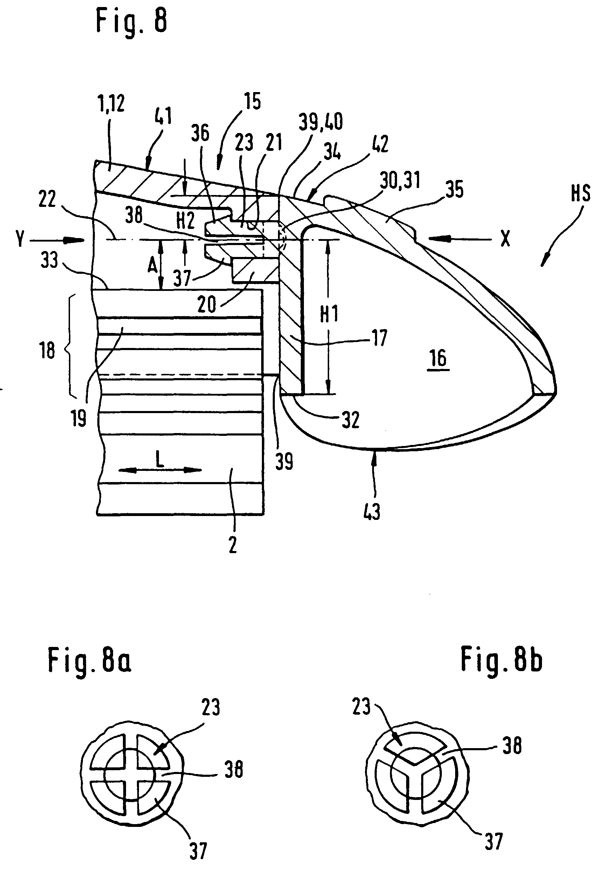

Auf das in Fig. 8 dargestellte Ausführungsbeispiel trifft im wesentlichen die gleiche Beschreibung zu wie für das Ausführungsbeispiel gemäß der Figuren 5 bis 7, und es wurden auch prinzipiell gleiche Bezugszeichen verwendet. Deshalb wird bei der Beschreibung des Ausführungsbeispieles gemäß Fig. 8 im wesentlichen nur auf unterschiedliche Ausbildungen bzw. Funktionen eingegangen.

Der wesentliche Unterschied besteht darin, daß die koaxial zu der geometrischen Achse 22 in die Rippe 20 eingebrachte Durchgangsbohrung 21 ringsum geschlossen ist. Um das Endstück durch einen möglichst einfachen Montageprozeß, aber trotzdem stabil und verliersicher an dem zweiten Ende 15 des Traggestells 1 bzw. des äußeren Krallenbügels 12 befestigen zu können, ist der Gelenkzapfen 23 etwas anders ausgebildet worden. An seinem freien Ende besitzt der Gelenkzapfen 23 eine konische Verdickung 36, die als Rastmittel ausgebildet ist. Wie aus Fig. 8 ersichtlich ist, ragt die konische Verdickung 36 an der Innenseite der Rippe 20 aus der Durchgangsbohrung 21 heraus und hintergreift mit hakenartigen Rastsegmenten 37 die Innenseite der Rippe 20 am Rand der Durchgangsbohrung 21, damit der Gelenkzapfen 23 zum Befestigen des Endstückes 16 an dem zweiten Ende 15 des Traggestells 1 einfach nur in Richtung des Teiles X in die Durchgangsbohrung 21 eingesteckt werden kann, ist der Gelenkzapfen 23 mit entsprechenden Ausweichschlitzen 38 ausgestattet. Diese Ausweichschlitze 38 sind von seiner Stirnseite her axial in den Gelenkzapfen 23 eingebracht. Diese Ausweichschlitze 38 sind dabei so gegliedert und so breit, daß die gebildeten Rasthaken 37 so weit federelastisch gegeneinander bewegt werden können, daß die konische Verdickung 36 problemlos in axialer Richtung durch die Durchgangsbohrung 21 hindurchführbar ist. Nachdem beim Einschieben des Gelenkzapfens 23 dieser seine endgültige Position in der Durchgangsbohrung 21 erreicht hat, federn die Rastsegmente 37 in ihre Ausgangsstellung zurück und hintergreifen den Rand der Durchgangsbohrung 21 an der Innenseite der Rippe 20. In den Fig. 8a und 8b sind zwei verschiedene Möglichkeiten für die Anordnung der Ausweichschlitze 38 in den Gelenkzapfen 23 angegeben. Bei dem Ausführungsbeispiel von Fig. 8a sind sie kreuzweise und bei dem Ausführungsbeispiel von 8b sind sie ypsilonförmig angeordnet.

## Patentansprüche

1. Wischblatt mit auswechselbarem Wischgummi für einen Fahrzeugscheibenwischer, wobei der Kopfteil (18) eines Wischgummis (2), der ggf. durch eine eingelegte Federschiene (19) aus Metall oder Kunststoff oder ein Tragprofil aus Kunststoff verstärkt ist, von Halteklauen (10) unten an einem zu dem Wischblatt gehörenden Traggestell (1) in seiner Längsrichtung (L) relativ zu den Halteklauen (10) frei verschiebbar gehalten ist und die Längsverschiebbarkeit des Wischgummis (2) durch einen ersten Anschlag (14) und einen zweiten Anschlag (17) begrenzt ist, welche dem ersten bzw. dem zweiten Ende des Wischgummis (2) gegenüberstehen, wobei der erste Anschlag (14) starr an dem ersten Ende (13) des Traggestells (1) befestigt ist und der zweite Anschlag (17) so an dem zweiten Ende (15) des Traggestells (1) befestigt ist, daß er wahlweise in eine Haltestellung (HS) oder in eine Freigabestellung (FS) hinsichtlich des Wischgummis (2) bringbar ist und zumindest in der Haltestellung (HS) arretierbar ist, dadurch **gekennzeichnet**, daß sich der zweite Anschlag (17) an einem Endstück (16) befindet, welches um eine zumindest annähernd parallel zu der Längsrichtung (L) des Wischgummis (2) verlaufende geometrische Achse (22) drehbar an dem zweiten Ende (15) des Traggestells (1) befestigt ist.

2. Wischblatt nach Anspruch 1, dadurch **gekennzeichnet**, daß das Endstück (16) mit dem zweiten Anschlag (17) an die Form des zweiten Endes (15) des Traggestells (1) angepaßt ist und zumindest weitgehend der Form des ersten Endes (13) des Traggestells (1) mit dem ersten Anschlag (14) entspricht.

3. Wischblatt nach einem der vorhergehenden Ansprüche, dadurch **gekennzeichnet**, daß die an dem zweiten Ende (15) des Traggestells (1) zwischen der äußeren Oberfläche und der Stirnfläche gebildete Kante (39) des Traggestells (1) sowie die gegenüberliegende, zwischen der äußeren Oberfläche und der Stirnfläche des Endstückes (16) bzw. des zweiten Anschlages (17) gebildete Kante (40) scharfkantig ausgebildet sind, so daß in Haltestellung (HS) des Endstückes (16) die Außenfläche (41) des zweiten Endes des Traggestells (1) unmittelbar und spaltfrei in die Außenfläche (42) des Endstückes (16) übergeht.

4. Wischblatt nach einem der vorhergehenden Ansprüche, dadurch **gekennzeichnet**, daß die Unterseite (43) des Endstückes (16) und gegebenfalls auch der entsprechendeAbschnitt der Unterseite des Traggestells (1) an dessen erstem Ende (13) konvex geformt ist.

5. Wischblatt nach einem der vorhergehenden Ansprüche, dadurch **gekennzeichnet**, daß das Traggestell (1) des Wischblattes und/oder das Endstück (16) aus Kunststoff besteht und der erste Anschlag (14) einstückig an dem ersten Ende (13) des Traggestells (1) und/oder der zweite Anschlag (17) einstückig an dem Endstück (16) angeformt ist.

6. Wischblatt nach einem der vorhergehenden Ansprüche, dadurch **gekennzeichnet**, daß die geometrische Achse (22) mittig oberhalb des Wischgummis (2) verläuft und der zweite Anschlag (17) sich rechtwinklig zu der geometrischen Achse (22) erstreckt.

7. Wischblatt nach Anspruch 6, dadurch **gekennzeichnet**, daß der zweite Anschlag (17) bzw. das Endstück (16) durch Drehung um 180° um die geometrische Achse (22) von der Haltestellung (HS) in eine Freigabestellung (FS) oder umgekehrt bringbar ist.

8. Wischblatt nach Anspruch 7, dadurch **gekennzeichnet**, daß die Höhe (H1) des zweiten Anschlages (17) zwischen der geometrischen Achse (22) und der Unterseite (32) des zweiten Anschlages (17) größer ist als der Abstand (A) zwischen der geoemetrischen Achse (22) und der Oberseite (33) des Wischgummis (2) und daß die Höhe (H2) des zweiten Anschlages (17) bzw. des Endstückes (16) zwischen der geometrischen Achse (22) und der Oberseite (34) des zweiten Anschlages (17) bzw. Endstückes (16) kleiner ist als der Abstand (A) zwischen der geometrischen Achse (22) und der Oberseite (33) des Wischgummis (2).

9. Wischblatt nach einem der vorhergehenden Ansprüche, dadurch **gekennzeichnet**, daß sich am zweiten Ende (15) des Traggestells (1) eine quer zur Längsrichtung (L) des Wischgummis (2) angeordnete Rippe (20) befindet, mit welcher das Endstück (16) um die geometrische Achse (22) drehbar verbunden ist.

10. Wischblatt nach Anspruch 9, dadurch **gekennzeichnet**, daß das Endstück (16) über einen Gelenkzapfen (23), der in einer Durchgangsbohrung (21) gelagert ist, mit dem zweiten Ende (15) des Traggestells (1) verbunden ist, wobei entweder der Gelenkzapfen (23) an dem Endstück (16) befestigt ist und die Durchgangsbohrung (21) sich in der Rippe (20) des Traggestells (1) befindet oder der Gelenkzapfen (23) an der Rippe (20) des Traggestells (1) befestigt ist und die Durchgangsbohrung (21) sich in einer quer zur Längsrichtung (11) des Wischgummis (2) angeordneten Rippe, vorzugsweise in dem zweiten Anschlag (17), befindet.

11. Wischblatt nach einem der vorhergehenden Ansprüche, dadurch **gekennzeichnet**, daß das Endstück (16) verliersicher und dabei vorzugsweise in Form einer Rastverbindung mit dem zweiten Ende (15) des Traggestells (1) verbunden ist.

12. Wischblatt nach Anspruch 10 oder 11, dadurch **gekennzeichnet**, daß der Gelenkzapfen (23) die Durchgangsbohrung (21) durchgreift und das aus der Durchgangsbohrung (21) herausragende freie Ende des Gelenkzapfens (23) verdickt ist.

13. Wischblatt nach Anspruch 12, dadurch **gekennzeichnet**, daß die Durchgangsbohrung (21) in der Rippe (20) derartig radial geöffnet ist, daß der Gelenkzapfen (23) in radialer Richtung gemäß dem pfeil (Z) rastend in die Durchgangsbohrung (21) einbringbar ist (Fig. 6a).

14. Wischblatt nach Anspruch 12, dadurch **gekennzeichnet**, daß die Durchgangsbohrung (21) in der Rippe (20) an ihrem Umfang geschlossen ist und daß der Gelenkzapfen (23) derartig mit axial eingebrachten Ausweichschlitzen (38) versehen ist, daß er in axialer Richtung (X) rastend in die Durchgangsbohrung (21) einbringbar ist.

15. Wischblatt nach einem der vorhergehenden Ansprüche, dadurch **gekennzeichnet**, daß das Arretieren des Endstückes (16) in der Haltestellung (HS) und evtl. auch in der Freigabestellung (FS) selbsttätig durch eine Rastung erfolgt.

16. Wischblatt nach Anspruch 15, dadurch **gekennzeichnet**, daß die Rastung von einem oder mehreren kugelkappelartigen Vorsprüngen (30) und diesen zugeordneten korrespondierenden Vertiefungen (31) gebildet wird, welche an entsprechenden Positionen der aneinander anliegenden Rippe (20) am zweiten Ende (15) des Traggestells (1) bzw. Rippe oder zweiten Anschlag (17) des Endstückes (16) angeordnet sind.

17. Wischblatt nach Anspruch 16 mit um 180° zueinander verdrehter Haltestellung (HS) und Freigabestellung (FS) des Endstückes (16), dadurch **gekennzeichnet**, daß bei Blickrichtung in Richtung der geometrischen Achse (22) zwei kugelkappenartige Vorsprünge (30) und zugehörige korrepondierende Vertiefungen (31) diametral gegenüberliegend links und rechts neben der geometrischen Achse (22) angeordnet sind.

18. Wischblatt nach einem der vorhergehenden Ansprüche, dadurch **gekennzeichnet**, daß das Endstück (16) vorzugsweise an seiner Oberseite (34) eine deutliche Markierung (35) trägt, insbesondere in Form eines in die zum Wischgummiwechsel erforderliche Drehrichtung des Endstückes (16) weisenden Doppelpfeiles.

19. Wischblatt nach Anspruch 18, dadurch **gekennzeichnet**, daß die Kennzeichnung (35) erhaben ausgebildet ist.

## Claims

1. Wiper blade with replaceable wiper squeegee for an automotive windshield wiper, such that the head piece (18) of a wiper squeegee (2), which may be reinforced by an embedded needle spring-slide (19) made of metal or plastic or a support profile made of plastic, is held by holding claws (10), in a manner to shift freely in its longitudinal direction (L) relative to the holding claws (10) under a support frame (1) belonging to the wiper blade, and the capability for longitudinal shifting of the wiper squeegee (2) is limited by a first stop (14) and a second stop (17), which stand opposite the first or second end, respectively, of the wiper squeegee (2), and here the first stop (14) is rigidly fastened to the first end (13) of the support frame (1) and the second stop (17) is fastened onto the second end (15) of the support frame (1) in such a fashion that it can optionally be brought into a holding position (HS) or into a release position (FS) with respect to the wiper squeegee (2) and can be locked at least in the holding position (HS), characterized in that the second stop (17) is mounted on a special end piece (16), which is fastened onto the second end (15) of the support frame (1) in a manner to rotate about a geometric axis (22) running at least approximately parallel to the longitudinal direction (L) of the wiper squeegee (1).

2. Wiper blade according to Claim 1, characterized in that the end piece (16) with the second stop (17) is adapted to the form of the second end (15) of the support frame (1) and at least largely corresponds in form to the first end (13) of the support frame (1) with the first stop (14).

3. Wiper blade according to one of the preceding Claims, characterized in that the edge (39) of the support frame (1) formed on the second end (15) of the support frame (1) between the outer surface and the front surface, as well as the opposite edge (40) formed between the outer surface and the front surface of the end piece (16) or of the second stop (17), resp., are formed as sharp edges, so that in the holding position (HS) of the end piece (16), the outer surface (41) of the second end of the support frame (1) passes over into the outer surface (42) of the end piece (16) directly and without a gap.

4. Wiper blade according to one of the preceding claims, characterized in that the underside (43) of the end piece (16), and on occasion also the corresponding section of the underside of the support frame (1), is formed convexly on its first end (13).

5. Wiper blade according to one of the preceding claims, characterized in that the support frame (1) of the wiper blade and/or the end piece (16) is made of plastic and the first stop (14) is molded in one piece onto the first end (13) of the support frame (1) and/or the second stop (17) is molded in one piece onto the end piece (16).

6. Wiper blade according to one of the preceding claims, characterized in that the geometric axis (22) runs centrally above the wiper squeegee (2), and the second stop (17) extends perpendicular to the geometric axis (22).

7. Wiper blade according to Claim 6, characterized in that the second stop (17) or the end piece (16), resp., can be brought from the holding position (HS) into the release position (FS), or vice versa, by rotating through 180° around the geometric axis (22).

8. Wiper blade according to Claim 7, characterized in that the height (H1) of the second stop (17) between the geometric axis (22) and the underside (32) of the second stop (17) is greater than the distance (A) between the geometric axis (22) and the upper side (33) of the wiper squeegee (2) and that the height (H2) of the second stop (17) or of the end piece (16) is smaller than the distance (A) between the geometric axis (22) and the upper side (33) of the wiper squeegee (2).

9. Wiper blade according to one of the preceding claims, characterized in that a rib (20) is mounted on the second end (15) of the support frame (1) transversely to the longitudinal direction (L) of the wiper squeegee (2), and the end piece (16) is connected to this rib so as to rotate around the geometric axis (22).

10. Wiper blade according to Claim 9, characterized in that the end piece (16) is connected with the second end (15) of the support frame (1) by a hinge pin (23) which is mounted in a through-hole (21), and here either the hinge pin (23) is fastened onto the end piece (16) and the through-hole (21) is located in the rib (20) of the support frame (1) or the hinge pin (23) is fastened onto the rib (20) of the support frame (1) and the through-hole (21) is located in a rib, mounted transversely to the longitudinal direction (L) of the wiper squeegee (2), preferably in the second stop (17).

11. Wiper blade according to one of the preceding claims, characterized in that the end piece (16) is connected in a lose-proof manner and hence preferably in the form of a locked connection with the second end (15) of the support frame (1).

12. Wiper blade according to Claim 10 or 11, characterized in that the hinge pin (23) engages the through-hole (21) and that the free end of the hinge pin (23) protruding out of the through-hole (21) is thickened.

13. Wiper blade according to Claim 12, characterized in that the through-hole (21) in the rib (20) has a radial opening of such a nature that the hinge pin (23) can be introduced in a locking fashion into the through-hole (21) in the direction of the arrow (Z) (Figure 6a).

14. Wiper blade according to Claim 12, characterized in that the through-hole (21) in the rib (20) is closed at its circumference, and the hinge pin (23) is provided with axially placed yielding slits (38), so that it can be placed in an engaged manner in the through-hole (21) in an axial direction (X).

15. Wiper blade according to one of the preceding claims, characterized in that the locking of the end piece (16) in the holding position (HS) and possibly also in the release position (FS) is accomplished automatically by a locking mechanism.

16. Wiper blade according to Claim 15, characterized in that the locking mechanism is formed from one or more balland-socket projections (30) and corresponding recesses (31) associated with these, which are placed in appropriate positions on the ribs (20) adjoining one another on the second end (15) of the support frame (1) or rib or second stop (17) of the end piece (16).

17. Wiper blade according to Claim 16 with holding position (HS) and release position (FS) located at 180° from one another, characterized in that, when viewed in the direction of the geometric axis (22), two ball-and-socket projections (30) and their associated corresponding recesses (31) are placed diametrically opposite to one another left and right along the geometric axis (22).

18. Wiper blade according to one of the preceding claims, characterized in that the end piece (16) preferably on its upper side (34), bears a clear mark (35), especially in the form of a double arrow indicating the necessary rotary direction of the end piece (16) for replacement of the wiper squeegee.

19. Wiper blade according to Claim 18, characterized in that the mark (35) is formed in raised characters.

## Revendications

1. Balai d'essuie-glace à lame caoutchouc remplaçable pour essuie-glace d'automobile, la partie de tête (18) d'une lame caoutchouc (2), qui est éventuellement renforcée par une barre flexible insérée (19) en métal ou matière plastique ou par un profilé porteur en matière plastique, étant maintenue par dessous, par des pattes de maintien (10), sur un cadre porteur (1) faisant partie du balai d'essuie-glace en étant librement coulissante dans sa direction longitudinale (L) par rapport aux pattes de maintien (10), et la faculté de coulissement longitudinal de la lame caoutchouc (2) étant limitée par une première butée (14) et une deuxième butée (17), qui font respectivement face à la première et la deuxième extrémités de la lame caoutchouc (2), la première butée (14) étant rigidement fixée à la première extrémité (13) du cadre porteur (1) et la deuxième butée (17) étant fixée à la deuxième extrémité (15) du cadre porteur (1) de telle sorte qu'elle peut être amenée au choix dans une position de maintien (HS) ou une position de libération (FS) concernant la lame caoutchouc (2), et qu'elle peut être bloquée au moins dans la position de maintien (HS), **caractérisé** en ce que la deuxième butée (17) se trouve sur un embout (16), qui est fixé à la deuxième extrémité (15) du cadre porteur (1) à rotation autour d'un axe géométrique (22) s'étendant au moins approximativement parallèlement à la direction longitudinale (L) de la lame caoutchouc (2).

2. Balai d'essuie-glace selon la revendication 1, **caractérisé** en ce que l'embout (16) pourvu de la deuxième butée (17) est adapté à la forme de la deuxième extrémité (15) du cadre porteur (1) et correspond au moins pour l'essentiel à la forme de la première extrémité (13), pourvue de la première butée (14), du cadre porteur (1).

3. Balai d'essuie-glace selon l'une quelconque des revendications précédentes, **caractérisé** en ce que l'arête (39) du cadre porteur (1), formée à la deuxième extrémité (15) du cadre porteur (1) entre la surface extérieure et la face frontale, ainsi que l'arête opposée (40), formée entre la surface extérieure et la face frontale de l'embout (16) ou encore de la deuxième butée (17), sont réalisées vives, de sorte que, dans la position de maintien (HS) de l'embout (16), la face extérieure (41) de la deuxième extrémité du cadre porteur (1) se poursuit directement et sans interstice par la face extérieure (42) de l'embout (16).

4. Balai d'essuie-glace selon l'une quelconque des revendications précédentes, **caractérisé** en ce que le dessous (43) de l'embout (16), et éventuellement aussi la partie correspondante du dessous du cadre porteur (1) à sa première extrémité (13), sont de forme convexe.

5. Balai d'essuie-glace selon l'une quelconque des revendications précédentes, **caractérisé** en ce que le cadre porteur (1) du balai d'essuie-glace et/ou l'embout (16) sont en matière plastique, et la première butée (14) est formée d'un seul tenant à la première extrémité (13) du cadre porteur (1) et/ou la deuxième butée (17) est formée d'un seul tenant sur l'embout (16).

6. Balai d'essuie-glace selon l'une quelconque des revendications précédentes, **caractérisé** en ce que l'axe géométrique (22) s'étend au milieu au-dessus de la lame caoutchouc (2), et la deuxième butée (17) s'étend perpendiculairement à l'axe géométrique (22).

7. Balai d'essuie-glace selon la revendication 6, **caractérisé** en ce que la deuxième butée (17) ou encore l'embout (16) peut être amené par rotation de 180° autour de l'axe géométrique (22) de la position de maintien (HS) dans une position de libération (FS) ou vice-versa.

8. Balai d'essuie-glace selon la revendication 7, **caractérisé** en ce que la hauteur (H1) de la deuxième butée (17) entre l'axe géométrique (22) et le dessous (32) de la deuxième butée (17) est supérieure à la distance (A) entre l'axe géométrique (22) et le dessus (33) de la lame caoutchouc (2), et en ce que la hauteur (H2) de la deuxième butée (17) ou encore de l'embout (16) entre l'axe géométrique (22) et le dessus (34) de la deuxième butée (17) ou encore de l'embout (16) est inférieure à la distance (A) entre l'axe géométrique (22) et le dessus (33) de la lame caoutchouc (2).

9. Balai d'essuie-glace selon l'une quelconque des revendications précédentes, **caractérisé** en ce qu'une nervure (20), disposée transversalement à la direction longitudinale (L) de la lame caoutchouc (2) et par laquelle l'embout (16) est assemblé à rotation autour de l'axe géométrique (22), se trouve à la deuxième extrémité (15) du cadre porteur (1).

10. Balai d'essuie-glace selon la revendication 9, **caractérisé** en ce que l'embout (16) est assemblé à la deuxième extrémité (15) du cadre porteur (1) par l'intermédiaire d'un pivot (23) qui est monté dans un perçage traversant (21), soit le pivot (23) étant fixé sur l'embout (16) et le perçage traversant (21) se trouvant dans la nervure (20) du cadre porteur (1), soit le pivot (23) étant fixé sur la nervure (20) du cadre porteur (1) et le perçage traversant (21) se trouvant dans une nervure disposée transversalement à la direction longitudinale (L) de la lame caoutchouc (2), de préférence dans la deuxième butée (17).

11. Balai d'essuie-glace selon l'une quelconque des revendications précédentes, **caractérisé** en ce que l'embout (16) est assemblé de façon imperdable à la deuxième extrémité (15) du cadre porteur (1), de préférence sous la forme d'un assemblage par enclenchement.

12. Balai d'essuie-glace selon la revendication 10 ou 11, **caractérisé** en ce que le pivot (23) traverse le perçage traversant (21), et l'extrémité libre du pivot (23) qui dépasse du perçage traversant (21) est épaissie.

13. Balai d'essuie-glace selon la revendication 12, **caractérisé** en ce que le perçage traversant (21) présent dans la nervure (20) est ouvert radialement de telle sorte que le pivot (23) peut être introduit en direction radiale selon la flèche (Z) dans le perçage traversant (21) pour s'y enclencher (figure 6a).

14. Balai d'essuie-glace selon la revendication 12, **caractérisé** en ce que le perçage traversant (21) présent dans la nervure (20) est fermé sur sa périphérie, et en ce que le pivot (23) est pourvu de fentes d'évitement (38), pratiquées axialement, de telle sorte qu'il peut être introduit en direction axiale (X) dans le perçage traversant (21) pour s'y enclencher.

15. Balai d'essuie-glace selon l'une quelconque des revendications précédentes, **caractérisé** en ce que le blocage de l'embout (16) dans la position de maintien (HS), et éventuellement aussi dans la position de libération (FS), s'effectue automatiquement par crantage.

16. Balai d'essuie-glace selon la revendication 15, **caractérisé** en ce que le crantage est formé par une ou plusieurs saillies (30) du genre calottes sphériques et des renfoncements correspondants (31) associés à ces saillies, qui sont disposés en des positions correspondantes respectivement de la nervure (20) à la deuxième extrémité (15) du cadre porteur (1) et de la nervure ou deuxième butée (17) de l'embout (16), appliquée contre la nervure (20).

17. Balai d'essuie-glace selon la revendication 16, avec une position de maintien (HS) et une position de libération (FS) de l'embout (16) qui sont tournées à 180° l'une par rapport à l'autre, **caractérisé** en ce que, suivant une direction d'observation dans la direction de l'axe géométrique (22), deux saillies (30) du genre calottes sphériques et des renfoncements associés correspondants (31) sont disposés en opposition diamétrale à gauche et à droite de l'axe géométrique (22).

18. Balai d'essuie-glace selon l'une quelconque des revendications précédentes, **caractérisé** en ce que l'embout (16) porte, de préférence sur son dessus (34), un marquage distinct (35), notamment sous la forme d'une double flèche dirigée dans la direction de rotation de l'embout (16) qui est nécessaire pour le remplacement de la lame caoutchouc.

19. Balai d'essuie-glace selon la revendication 18, **caractérisé** en ce que le marquage (35) est réalisé en relief.
